# EUROPÄISCHE PATENTSCHRIFT

(11) **EP 1 036 689 B1**
(45) Veröffentlichungstag und Bekanntmachung des Hinweises auf die Patenterteilung: **23.08.2006**
(21) Anmeldenummer: 00104890.9
(22) Anmeldetag: 08.03.2000
(51) Int. Cl.: B60K 5/12

(54) **Befestigungseinrichtung für ein Bauteil im Motorraum eines Kraftfahrzeuges**
Fastener for a component in the engine compartment of a motor vehicle
Dispositif de fixation pour un élément dans le compartiment moteur d'un véhicule automobile

(30) Priorität: 16.03.1999 DE 19911663
(43) Veröffentlichungstag der Anmeldung: 20.09.2000
(73) Patentinhaber: Volkswagen Aktiengesellschaft, 38436 Wolfsburg (DE)
(72) Erfinder: Fechner, Holger, 38440 Wolfsburg (DE)

(56) Entgegenhaltungen:
- WO-A-98/22327
- DE-C- 19 636 167
- GB-A- 2 309 012

## Beschreibung

Die Erfindung betrifft ein Kraftfahrzeug, mit einem Fahrzeuginnenraum und einem in Fahrtrichtung vor dem Fahrzeuginnenraum angeordneten Motorraum, wobei im Motorraum eine Antriebseinheit angeordnet ist, die an zumindest einem Längsträger befestigt ist und im Bereich zwischen dem Fahrzeuginnenraum und der Antriebseinheit ein Hilfsrahmen vorgesehen ist, der an einem Längsträger mittels einer Befestigungseinrichtung befestigt ist.

Aus der DE 196 36 167 C1 (beinhaltet die Merkmale des Oberbegriffs des Anspruchs 1) geht eine Aggregatlagerung für ein Kraftfahrzeug hervor, die einen Hilfsrahmen zum Tragen des Aggregats aufweist. Bei einem Auffahrunfall entstehen durch die Kraftfahrzeugverformung Relativverschiebungen im Bereich der Lager, die zu einem Lösen der Lager führen, wodurch das Aggregat vom Fahrzeug getrennt wird und auf den Boden fallen kann, wodurch die Fahrgastzelle über das Aggregat hinweg gleiten kann.

In der DE-OS 22 41 651 ist ein Personenkraftwagen beschrieben, dessen Antriebseinheit in Fahrtrichtung vorne an einem Drehlager gelagert ist und in Fahrtrichtung hinten von einem Lager mit Sollbruchstelle gehalten wird. Bei einem Auffahrunfall bricht die hintere Verbindung, so daß die Antriebseinheit um das Drehlager nach unten schwenkt und die Fahrgastzelle über den Motor hinweg nach oben gleiten kann.

Der Erfindung liegt die Aufgabe zugrunde, ein Kraftfahrzeug der eingangs beschriebenen Gattung derart weiterzubilden, daß bei einem Auffahrunfall mehr Verformungsenergie aufgenommen werden kann.

Die Aufgabe wird durch ein Kraftfahrzeug mit den Merkmalen des Anspruchs 1 gelöst. Vorteilhafte Ausgestaltungen der Erfindung sind in den Unteransprüchen angegeben.

Der Erfindung liegt die Erkenntnis zugrunde, daß bei Kraftfahrzeugen mit einem Fahrzeuginnenraum und einem in Fahrtrichtung vor dem Fahrzeuginnenraum angeordneten Motorraum, in dem die Antriebseinheit angeordnet ist, und bei dem im Bereich zwischen dem Fahrzeuginnenraum und der Antriebseinheit ein Hilfsrahmen vorgesehen ist, der an einem Längsträger befestigt ist, bei einem Auffahrunfall sich die Antriebseinheit mit dem Hilfsrahmen bzw. daran befestigten Elementen verkeilt und dies zu mechanischen Verspannungen führt, die eine weitere Bewegung des Motors nach hinten verhindern. Hierdurch wird die Verformbarkeit des Fahrzeuges im Bereich des Motorraums begrenzt und damit auch die bei einem Auffahrunfall durch Verformung absorbierbare Energie begrenzt.

Die Befestigungseinrichtung ist erfindungsgemäß bei einem Unfall aktiv lösbar, so daß bei einem Auffahrunfall der Hilfsrahmen oder ein sonstiges den Verschiebeweg der Antriebseinheit blockierendes Bauteil von seiner Halterung gelöst werden kann und der vollständige Raum des Motorraums zum Verschieben der Antriebseinheit genutzt werden kann. Hierdurch können die Antriebseinheit umgebenden Bauteile, wie z. B. die Längsträger, die Karosserie und dergleichen stark verformt werden, wodurch mehr Aufprallenergie durch die Verformung absorbiert werden kann.

Bei einer bevorzugten Ausführungsform der erfindungsgemäß bei einem Unfalll aktiv lösbaren Befestigungseinrichtung ist ein Sprengsatz vorgesehen, wie er z. B. vom Airbag bekannt ist, der die Befestigungseinrichtung im Falle eines Unfalles löst, wobei er beispielsweise ein Verbindungselement aus seinem Sitz befördert oder dieses zerstört.

Die Erfindung wird nachfolgend beispielhaft näher anhand der Zeichnungen beschrieben, in denen zeigen:
- Figur 1: schematisch einen Motorraum eines Kraftfahrzeuges in einer aufgeschnittenen Darstellung in der Seitenansicht, und
- Figur 2: die in Figur 1 gezeigte Ansicht eines Motorraums nach einem Auffahrunfall, wobei keine erfindungsgemäß bei einem Unfall aktiv lösbare Befestigungseinrichtung vorgesehen ist.

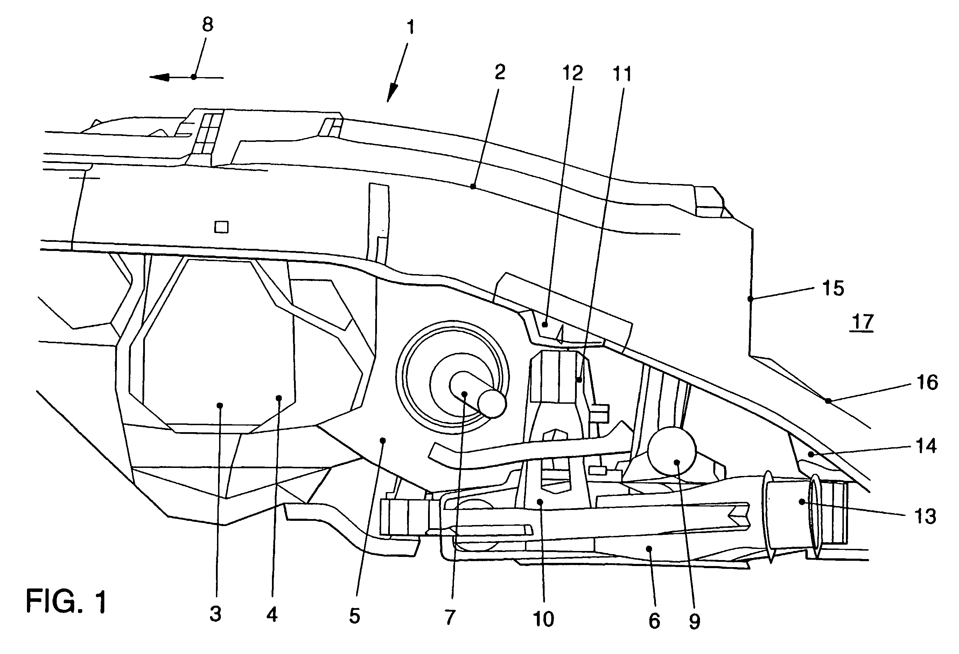

Figur 1 zeigt schematisch den Motorraum eines Fahrzeuges in einer aufgeschnittenen perspektivischen Darstellung. Der Motorraum 1 weist zwei etwa parallel angeordnete Längsträger 2 (in Figur 1 kann man nur einen Längsträger erkennen), eine Antriebseinheit 3 mit einem quer eingebauten Motor 4 mit einem angeblockten Getriebe 5 und einen Hilfsrahmen 6 auf. Am Getriebe 5 steht ein Abtriebsachsstummel 7 vor, der mit entsprechenden Achselementen (nicht dargestellt) mit einem Rad (nicht dargestellt) verbunden ist.

In Fahrtrichtung (Pfeil 8) hinter der Antriebseinheit 3 ist der Hilfsrahmen 6 angeordnet. Der Hilfsrahmen 6 ist ein stabiler Stahlrahmen, der zur Anbindung eines Lenkgetriebes 9, Stabilisatoren (nicht dargestellt) und dergleichen dient. Der Hilfsrahmen ist an seinem in Fahrtrichtung vorne liegenden Bereich mit vertikal angeordneten Aluminiumstützen 10 versehen, die mit ihrem oberen Endbereich an einer Halterung 11 befestigt sind. An dem zur Halterung 11 benachbarten Bereich des Längsträgers 2 ist an diesem eine Konsole 12 ausgebildet, wobei die Halterung 11 und die Konsole 12 mit einer Befestigungseinrichtung miteinander verbunden sind.

Am in Fahrtrichtung hinteren Bereich des Hilfsrahmens 6 ist eine weitere Halterung 13 ausgebildet und benachbart dazu ist am Längsträger 2 eine weitere Konsole 14 vorgesehen. Die Halterung 13 und die Konsole 14 sind auch mit einer Befestigungseinrichtung miteinander verbunden.

Der Längsträger 2 weist an seinem in Figur 1 gezeigten hinteren Endbereich einen von einer Vertikallinie 15 und einer schräg nach hinten unten verlaufenden Linie 16 begrenzten Ausschnittbereich auf, der etwa dem Fußraum 17 des Fahrzeuginnenraums entspricht.

Die Befestigungseinrichtung ist erfindungsgemäß bei einem Unfall aktiv lösbar, das heißt, daß bei einem Unfall die mechanischen Verbindungen zwischen den Halterungen 11, 13 und den Konsolen 12, 14 schlagartig gelöst werden.

Beim vorliegenden Ausführungsbeispiel ist die Befestigungseinrichtung durch eine Schraube realisiert, die in eine sacklochförmige Gewindebohrung in einer der Konsolen 12, 14 eingreift. In der Gewindebohrung der Konsole befinden sich ein Sprengsatz, wie er z. B. vom Airbag bekannt ist. Der Sprengsatz ist mit einer Zündeinrichtung verbunden, die an einem Unfallsensor bzw. Aufprallsensor angeschlossen ist. Erzeugt der Unfallsensor ein vorbestimmtes Signal, so zündet die Zündeinrichtung den Sprengsatz, wodurch die Schraube aus der Gewindebohrung in der Konsole gesprengt wird. Hierdurch wird der Hilfsrahmen 6 schlagartig von den Längsträgern 2 gelöst. Hierdurch wird der Hilfsrahmen 6 vom Fahrzeug entkoppelt und der Verschiebeweg für die Antriebseinheit 3 wird in Fahrtrichtung 8 nach hinten frei. Hierdurch ist es möglich, den gesamten Raum zwischen dem Fahrzeuginnenraum (Fußraum 17) und der Antriebseinheit 3 für eine Verschiebung der Antriebseinheit 3 zu nutzen. Die sich bei einem Unfall verformenden Elemente, wie z. B. die Längsträger 2, die Karosserie und dergleichen können deshalb stärker verformt werden, wodurch eine hohe Aufprallenergie absorbiert werden kann.

Anstelle des Sprengens einer Schraube aus einer Gewindebohrung kann die Schraube auch selbst durch die Sprengung zerstört werden, indem beispielsweise der Kopf der Schraube abgesprengt wird.

Die Trennung der Verbindung des Hilfsrahmens 6 vom Längsträger 2 kann auch durch Lösen der Konsolen 12, 14 mittels einer zwischen den Konsolen 12, 14 und den Längsträgern 2 angeordneten Sprengladung erfolgen. Bei einer solchen Ausführungsform werden die Konsolen 12, 14 von den Längsträgern 2 gesprengt.

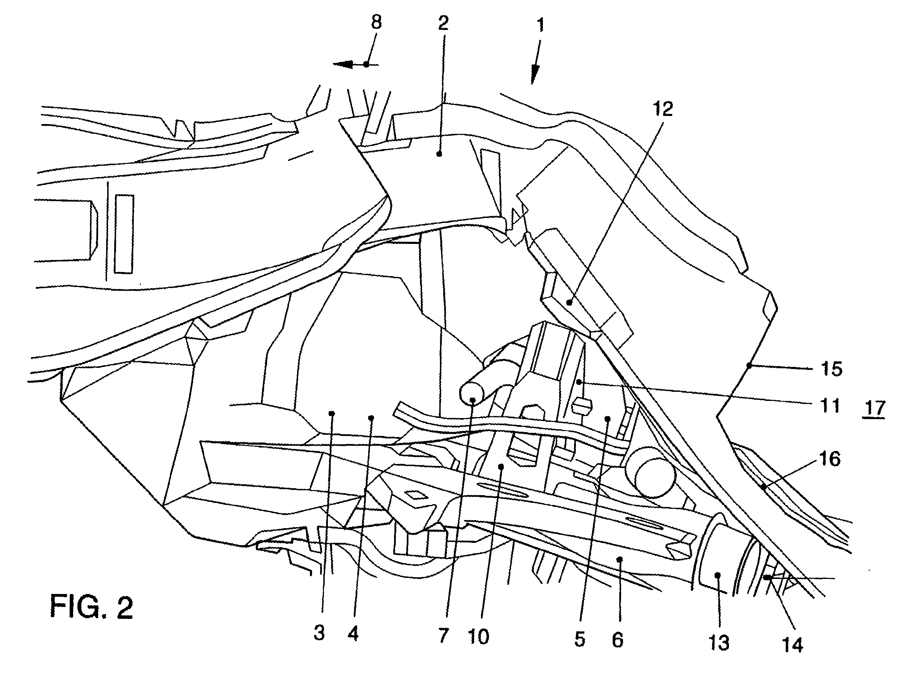

Figur 2 zeigt die im Motorraum bei einem Auffahrunfall auftretenden Verformungen, wobei bei dem hier gezeigten Kraftfahrzeug keine bei einem Unfall erfindungsgemäß aktiv lösbare Befestigungseinrichtung vorgesehen ist, das heißt, daß die Verbindung zwischen den Längsträgern 2 und dem Hilfsrahmen 6 sich bei einem Auffahrunfall nicht löst. In Figur 2 ist gut zu erkennen, daß der Abtriebsachsstummel 7 des Getriebes 5 gegen die Aluminiumstütze 10 anschlägt, wodurch eine weitere Bewegung der Antriebseinheit 3 nach in Fahrtrichtung 8 hinten verhindert wird. Hierdurch wird der im Motorraum 1 unmittelbar vor dem Fußraum 17 liegende Freiraum nicht zur weiteren Verformung des Fahrzeuges genutzt. Mit anderen Worten heißt dies, daß die Fahrzeugverformung durch die Verspannung zwischen dem Hilfsrahmen 6, insbesondere dessen Aluminiumstützen 10 und der Antriebseinheit 3 begrenzt werden. Die erfindungsgemäße Lösung mit aktiv lösbaren Befestigungseinrichtungen beseitigt dieses Problem.

Die Erfindung ist nicht auf eine Ausführungsform mit einem Sprengsatz zum Lösen der Befestigungseinrichtung beschränkt. Es ist z. B. auch möglich, daß die Befestigungseinrichtung ein Verbindungselement aufweist, das mittels eines Riegels fixiert ist, und daß zum Lösen des Verbindungselementes eine elektromagnetische Entriegelungsvorrichtung vorgesehen ist. Der Riegel ist vorzugsweise mit einer Feder derart vorgespannt, daß beim Aktivieren der Entriegelungsvorrichtung der Riegel schlagartig gelöst wird.

### BEZUGSZEICHENLISTE

- 1: Motorraum
- 2: Längsträger
- 3: Antriebseinheit
- 4: Motor
- 5: Getriebe
- 6: Hilfsrahmen
- 7: Abtriebsachsstummel
- 8: Fahrtrichtung
- 9: Lenkgetriebe
- 10: Aluminiumstützen
- 11: Halterung
- 12: Konsole
- 13: Halterung
- 14: Konsole
- 15: Vertikale Fußraumbegrenzung
- 16: Unterfußraumbegrenzung
- 17: Fußraum

## Patentansprüche

1. Kraftfahrzeug, mit einem Fahrzeuginnenraum (17) und einem in Fahrtrichtung (8) vor dem Fahrzeuginnenraum (17) angeordneten Motorraum (1), wobei im Motorraum (1) eine Antriebseinheit (3) angeordnet ist, und im Bereich zwischen dem Fahrzeuginnenraum (17) und der Antriebseinheit (3) ein Hilfsrahmen (6) vorgesehen ist, der an einem Längsträger (2) mittels einer Befestigungseinrichtung befestigt ist,
**dadurch gekennzeichnet,**
**dass** die Befestigungseinrichtung bei einem Unfall aktiv lösbar ist, so dass in diesem Fall die Antriebseinheit (3) in den an den Fahrzeuginnenraum (17) angrenzenden Bereich des Motorraums (1) verschoben und das Kraftfahrzeug im Bereich des Motorraums (1) zur Aufnahme kinetischer Energie verformt werden kann.

2. Kraftfahrzeug nach Anspruch 1,
**gekennzeichnet durch**
einen Unfallsensor, der bei einem Unfall vorbestimmter Stärke ein Unfallsignal ausgibt, auf das die Befestigungseinrichtung gelöst wird.

3. Kraftfahrzeug nach Anspruch 1 oder 2,
**dadurch gekennzeichnet,**
**dass** die Befestigungseinrichtung ein Verbindungselement aufweist, und
**dass** zum Lösen des Verbindungselementes ein Sprengsatz vorgesehen ist.

4. Kraftfahrzeug nach Anspruch 3,
**dadurch gekennzeichnet,**
**dass** das Verbindungselement ein geschraubter oder genieteter Bolzen ist, der einen Kopf aufweist, und dass der Sprengsatz zwischen dem Kopf und dem durch den Bolzen befestigten Teil angeordnet ist, so dass bei einer Betätigung des Sprengsatzes der Kopf vom Bolzen gelöst wird.

5. Kraftfahrzeug nach Anspruch 1 oder 2,
**dadurch gekennzeichnet,**
**dass** die Befestigungseinrichtung aus zwei Teilen ausgebildet ist, wobei zwischen den beiden Teilen ein Sprengsatz derart angeordnet ist, dass beim Zünden des Sprengsatzes die beiden Teile voneinander gelöst werden.

6. Kraftfahrzeug nach Anspruch 1 oder 2,
**dadurch gekennzeichnet,**
**dass** die Befestigungseinrichtung ein Verbindungselement aufweist, das mittels eines Riegels fixiert ist, und dass zum Lösen des Verbindungselementes eine elektromagnetische Entriegelungsvorrichtung vorgesehen ist.

7. Kraftfahrzeug nach Anspruch 6,
**dadurch gekennzeichnet,**
**dass** der Riegel mit einer Feder derart vorgespannt ist, dass beim Aktivieren der Entriegelungsvorrichtung der Riegel schlagartig gelöst wird.

8. Kraftfahrzeug, mit einem Fahrzeuginnenraum (17) und einem in Fahrtrichtung (8) vor dem Fahrzeuginnenraum (17) angeordneten Motorraum (1) sowie mit zwei Längsträgern (2) im Motorraum (1), die mit Abstand zueinander angeordnet sind, wobei zwischen den Längsträgern (2) eine Antriebseinheit (3) angeordnet ist, und benachbart zur Antriebseinheit (3) im Bereich zwischen der Antriebseinheit (3) und dem Fahrzeuginnenraum (17) ein Hilfsrahmen (6) vorgesehen ist, der an den beiden Längsträgern (2) an jeweils zwei Verbindungsstellen mit einer bei einem Unfall aktiv lösbaren Befestigungseinrichtung nach einem der Ansprüche 1 bis 7 befestigt ist.

9. Kraftfahrzeug nach einem der Ansprüche 1 bis 8,
**dadurch gekennzeichnet,**
**dass** im Motorraum (1) ein Sprengsatz zum Lösen der Befestigungseinrichtung angeordnet ist, und
**dass** eine Zündeinrichtung zum Zünden des Sprengsatzes mit einem Unfallsensor verbunden ist, so dass bei einem Unfall die Befestigungseinrichtung gelöst wird, um eine unerwünschte Verspannung bei der Verformung der Fahrzeugteile zu vermeiden.

## Claims

1. Motor vehicle, having a vehicle passenger compartment (17) and an engine compartment (1) arranged in front of the vehicle passenger compartment (17), viewed in the direction of travel (8), a drive unit (3) being arranged in the engine compartment (1) and a subframe (6), which is fixed to a side member (2) by means of a mounting attachment, being provided in the area between the vehicle passenger compartment (17) and the drive unit (3),
**characterized in that**
the mounting attachment is actively releasable in the event of an accident, so that in this eventuality the drive unit (3) is displaced into the area of the engine compartment (1) adjoining the vehicle passenger compartment (17) and the motor vehicle can be deformed in the area of the engine compartment (1) in order to absorb kinetic energy.

2. Motor vehicle according to Claim 1,
**characterized by**
a crash sensor, which in the event of an accident of predetermined intensity emits a crash signal triggering the release of the mounting attachment.

3. Motor vehicle according to Claim 1 or 2,
**characterized in that**
the mounting attachment has a fastener, and that an explosive device is provided for release of the fastener.

4. Motor vehicle according to Claim 3,
**characterized in that**
the fastener is a threaded or riveted bolt, which has a head, and that the explosive device is arranged between the head and part fixed by the bolt, so that the head is detached from the bolt on actuation of the explosive device.

5. Motor vehicle according to Claim 1 or 2,
**characterized in that**
the mounting attachment is formed from two parts, an explosive device being arranged between the two parts in such a way that the two parts are detached from one another on detonation of the explosive device.

6. Motor vehicle according to Claim 1 or 2,
**characterized in that**
the mounting attachment has a fastener, which is fixed by means of a bolt, and that an electromagnetic release device is provided for release of the fastener.

7. Motor vehicle according to Claim 6,
**characterized in that** the bolt is preloaded by means of a spring, in such a way that the bolt is abruptly released on activation of the release device.

8. Motor vehicle, having a vehicle passenger compartment (17) and an engine compartment (1) arranged in front of the vehicle passenger compartment (17), viewed in the direction of travel (8), together with two side members (2) in the engine compartment (1), which are arranged at a distance from one another, a drive unit (3) being arranged between the side members (2), and a subframe (6), which is fixed to the two side members (2) at each of two connection points by means of a mounting attachment, actively releasable in the event of a crash, according to any one of Claims 1 to 7, being provided adjacent to the drive unit (3) in the area between the drive unit (3) and the vehicle passenger compartment (17).

9. Motor vehicle according to any one of Claims 1 to 8,
**characterized in that**
an explosive device for release of the mounting attachment is arranged in the engine compartment (1), and
that a detonating device for detonation of the explosive device is connected to a crash sensor, so that in the event of an accident the mounting attachment is released in order to prevent an unwanted strain in the event of deformation of the vehicle parts.

## Revendications

1. Véhicule automobile, comprenant un habitacle de véhicule (17) et un compartiment moteur (1) disposé avant l'habitacle de véhicule (17) dans la direction de conduite (8), une unité d'entraînement (3) étant disposée dans le compartiment moteur (1), et un cadre auxiliaire (6) étant prévu dans la région entre l'habitacle du véhicule (17) et l'unité d'entraînement (3), lequel est fixé sur un support longitudinal (2) au moyen d'un dispositif de fixation,
**caractérisé en ce que**
le dispositif de fixation peut être détaché activement en cas d'accident, de sorte que dans ce cas l'unité d'entraînement (3) soit poussée dans la région du compartiment moteur (1) adjacente à l'habitacle du véhicule (17) et que le véhicule automobile puisse être déformé dans la région du compartiment moteur (1) pour absorber l'énergie cinétique.

2. Véhicule automobile selon la revendication 1,
**caractérisé par**
un capteur d'accident qui fournit un signal d'accident dans le cas d'un accident d'une intensité prédéterminée, en réaction duquel le dispositif de fixation se détache.

3. Véhicule automobile selon la revendication 1 ou 2,
**caractérisé en ce que**
le dispositif de fixation présente un élément de connexion et **en ce que** l'on prévoit une charge explosive pour détacher l'élément de connexion.

4. Véhicule automobile selon la revendication 3,
**caractérisé en ce que**
l'élément de connexion est un goujon vissé ou riveté, qui présente une tête et **en ce que** la charge explosive est disposée entre la tête et la partie fixée par le goujon, de sorte que dans le cas d'un actionnement dé la charge explosive, la tête du goujon soit détachée.

5. Véhicule automobile selon la revendication 1 ou 2,
**caractérisé en ce que**
le dispositif de fixation est constitué de deux parties, une charge explosive étant disposée entre les deux parties de telle sorte que lors de l'allumage de la charge explosive, les deux parties soient détachées l'une de l'autre.

6. Véhicule automobile selon la revendication 1 ou 2,
**caractérisé en ce que**
le dispositif de fixation présente un élément de connexion qui est fixé au moyen d'un verrou et **en ce que** pour détacher l'élément de connexion, on prévoit un dispositif de déverrouillage électromagnétique.

7. Véhicule automobile selon la revendication 6,
**caractérisé en ce que**
le verrou est précontraint par un ressort de telle sorte que lors de l'activation du dispositif de déverrouillage, le verrou soit détaché brutalement.

8. Véhicule automobile, comprenant un habitacle de véhicule (17) et un compartiment moteur (1) disposé avant l'habitacle de véhicule (17) dans la direction de conduite (8), ainsi que deux supports longitudinaux (2) dans le compartiment moteur (1), qui sont espacés l'un de l'autre, une unité d'entraînement (3) étant disposée entre les supports longitudinaux (2), et un cadre auxiliaire (6) étant prévu à proximité de l'unité d'entraînement (3) dans la région entre l'unité d'entraînement (3) et l'habitacle du véhicule (17), lequel est fixé aux deux supports longitudinaux (2) au niveau de deux points de connexion respectifs par un dispositif de fixation activement détachable en cas d'accident selon l'une quelconque des revendications 1 à 7.

9. Véhicule automobile selon l'une quelconque des revendications 1 à 8,
**caractérisé en ce que**
l'on prévoit dans le compartiment moteur (1) une charge explosive pour détacher le dispositif de fixation, et
**en ce qu'**un dispositif d'allumage pour l'allumage de la charge explosive est connecté à un capteur d'accident, de sorte que dans le cas d'un accident, le dispositif de fixation soit détaché pour éviter une distorsion indésirable lors de la déformation des pièces du véhicule.
